# EUROPEAN PATENT APPLICATION

(11) **EP 4 535 121 A1**
(43) Date of publication of application: **09.04.2025**
(21) Application number: 23811391.4
(22) Date of filing: 06.03.2023
(51) Int. Cl.: G05G 5/03

(54) **OPERATION APPARATUS**

(30) Priority: 27.05.2022 JP 2022086659
(71) Applicant: Alps Alpine Co., Ltd., Tokyo 145-8501 (JP)
(72) Inventor: KAWASE, Hideo, Tokyo 145-8501 (JP); TAKEUCHI, Shota, Tokyo 145-8501 (JP); YAMADA, Yukimitsu, Tokyo 145-8501 (JP); TAKAHASHI, Kazuhiro, Tokyo 145-8501 (JP); OTOMO, Takashi, Tokyo 145-8501 (JP)
(74) Representative: Maiwald GmbH
(86) International application number: PCT/JP2023/008300
(87) International publication number: WO 2023/228510

(57) **Abstract**

An operating apparatus includes an operating unit capable of a movement operation, a load application unit configured to apply a load to the movement operation of the operating unit based on predetermined load characteristics, and an adjustment unit configured to adjust the load characteristics based on a moving speed of the operating unit after the operating unit reaches a predetermined position.

## Description

### Technical Field

The present invention relates to operating apparatuses.

### Background Art

PTL 1 discloses a technique for an operating apparatus equipped with a push-operable operating member, wherein the load of the push operation is controlled, and a tactile feel is provided to the operator based on the push operation by controlling a motor.

PTL 1 also discloses a technique capable of presenting a tactile feel to the operator when the push position of the operating member reaches a predetermined push position by sharply decreasing the load of the push operation.

### Citation List

### Patent Literature

PTL 1: Japanese Unexamined Patent Application Publication No. 2019-219948

### Summary of Invention

### Technical Problem

However, in the technique disclosed in PTL 1, if the operating member does not achieve a sufficient moving speed when the push position of the operating member reaches a predetermined push position, there is a risk that a suitable tactile feel cannot be provided.

### Solution to Problem

An operating apparatus according to one embodiment includes an operating unit capable of a movement operation, a load application unit configured to apply a load to the movement operation of the operating unit based on predetermined load characteristics, and an adjustment unit configured to adjust the load characteristics based on a moving speed of the operating unit after the operating unit reaches a predetermined position.

### Advantageous Effects of Invention

An operating apparatus according to one embodiment is capable of providing a suitable tactile feel.

### Brief Description of Drawings

[Fig. 1] Fig. 1 is a side view of an operating apparatus according to one embodiment.
[Fig. 2] Fig. 2 is an external perspective view of the operating apparatus according to one embodiment.
[Fig. 3] Fig. 3 is a graph illustrating an example of predetermined load characteristics that the operating apparatus according to one embodiment uses for tactile feedback control.
[Fig. 4] Fig. 4 is a graph illustrating an example of adjustment of predetermined load characteristics performed by a control unit of the operating apparatus according to one embodiment.
[Fig. 5] Fig. 5 is a graph illustrating an example of adjustment of predetermined load characteristics performed by the control unit of the operating apparatus according to one embodiment.
[Fig. 6] Fig. 6 is a graph illustrating an example of adjustment of predetermined load characteristics performed by the control unit of the operating apparatus according to one embodiment.
[Fig. 7] Fig. 7 is a diagram illustrating an example of the functional configuration of the control unit of the operating apparatus according to one embodiment.
[Fig. 8] Fig. 8 is a flowchart illustrating an example of the processing procedure of the control unit of the operating apparatus according to one embodiment.
[Fig. 9] Fig. 9 shows graphs illustrating a load application example of the push operation performed by the operating apparatus according to one embodiment.
[Fig. 10] Fig. 10 shows graphs illustrating a load adjustment example (a first example) of the push operation performed by the operating apparatus according to one embodiment.
[Fig. 11] Fig. 11 shows graphs illustrating a load adjustment example (a second example) of the push operation performed by the operating apparatus according to one embodiment.
[Fig. 12] Fig. 12 is a graph illustrating a load adjustment example (a third example) of the push operation performed by the operating apparatus according to one embodiment.

### Description of Embodiments

One embodiment will be described hereinbelow with reference to the drawings. In the following description, the Z-axis direction is defined as the vertical direction (an example of "first direction"), the X-axis direction is defined as the front-back direction, and the Y-axis direction is defined as the lateral direction (an example of "second direction"), for the sake of convenience. Note that the positive direction of the Z-axis direction is defined as the upward direction, the positive direction of the X-axis is defined as the forward direction, and the positive direction of the Y-axis is defined as the rightward direction.

### Configuration of Operating Apparatus 100

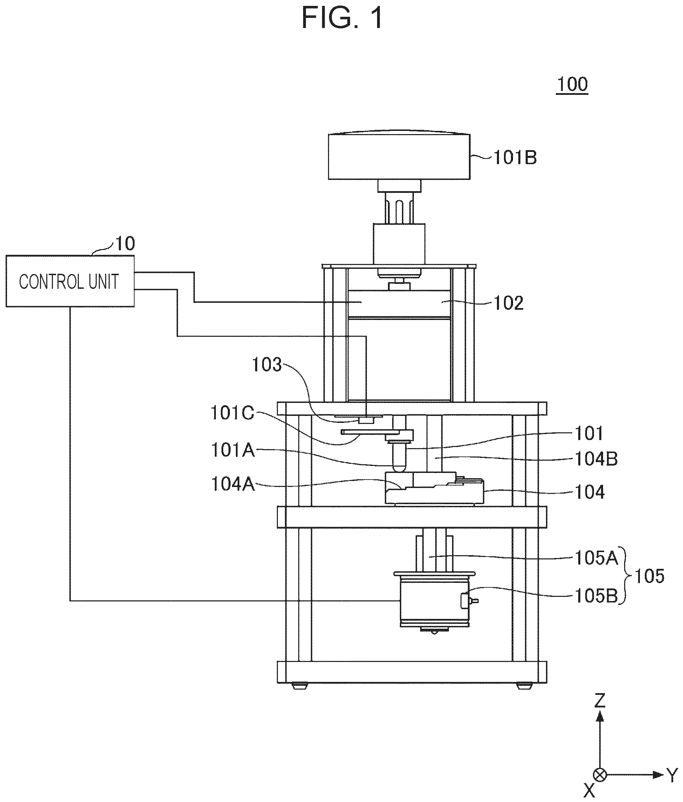

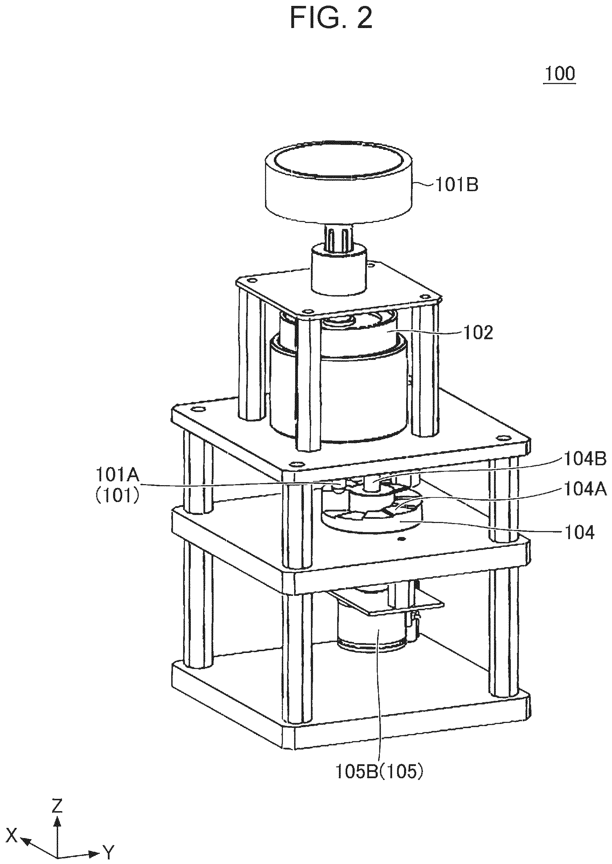

Fig. 1 is a side view of an operating apparatus 100 according to one embodiment. Fig. 2 is an external perspective view of the operating apparatus 100 according to one embodiment. The operating apparatus 100 illustrated in Figs. 1 and 2 is used in various electronic devices (for example, game controllers) and is capable of a movement operation by user's push, etc. As illustrated in Figs. 1 and 2, the operating apparatus 100 includes an operation shaft 101 (an example of "operating unit") extending in the vertical direction (Z-axis direction). An operating knob 101B is attached to the operation shaft 101. In the example illustrated in Figs. 1 and 2, the operating knob 101B is attached to the upper end of the operation shaft 101. The operating apparatus 100 can move the operation shaft 101 downward by the downward push operation (an example of "movement operation") of the operating knob 101B. The amount of downward movement of the operation shaft 101 is detected by a sensor 103 and is output from the sensor 103 to a control unit 10.

As illustrated in Figs. 1 and 2, the operating apparatus 100 includes an operation shaft 101, a kinesthetic-sense generator 102, the sensor 103, a movable-range adjustment section 104, a motor unit 105, and the control unit 10.

The operation shaft 101 is a rod-like member extending in the vertical direction (Z-axis direction). The operation shaft 101 passes through the interior of the kinesthetic-sense generator 102. The operation shaft 101 is movable linearly in the vertical direction (Z-axis direction) inside the kinesthetic-sense generator 102. The lower end (the end on the negative side of the Z-axis) of the operation shaft 101 has a hemispherical end portion 101A. The end portion 101A protrudes downward from the lower surface of the kinesthetic-sense generator 102. The upper end (the end on the positive side of the Z-axis) of the operation shaft 101 protrudes upward from the upper surface of the kinesthetic-sense generator 102. The operating knob 101B is attached to the upper end (the end on positive side of the Z-axis) of the operation shaft 101.

The kinesthetic-sense generator 102 is an example of "load application unit", which supports the operation shaft 101 that passes through the interior of the kinesthetic-sense generator 102 so as to move linearly in the vertical direction (Z-axis direction) and applies force to the operation shaft 101. Thus, the kinesthetic-sense generator 102 imposes a load to the push operation of the operating knob 101B. The kinesthetic-sense generator 102 is operated under the control of the control unit 10. In this embodiment, a voice coil motor is used as the kinesthetic-sense generator 102. However, this is illustrative only. Another device (for example, a device using a linear motor or magnetic viscose fluid) may be used as the kinesthetic-sense generator 102. The greater the load on the push operation, the greater force is generated in the direction opposite to the direction of the push operation. In other words, the drag against the operation of the operating knob 101B increases. The load on the push operation may take on a minus value. In this case, the operating knob 101B is urged in the same direction as the operating direction of the push operation.

The sensor 103 is an example of "position detection unit", which detects the amount of downward movement of the operation shaft 101. The sensor 103 outputs a detection signal representing the detected amount of downward movement of the operation shaft 101 to the control unit 10. This embodiment uses as an example of the sensor 103 a photosensor provided in the kinesthetic-sense generator 102 and detecting the distance to a reflector 101C attached to the operation shaft 101.

The movable-range adjustment section 104 is a disc-like member. The upper surface of the movable-range adjustment section 104 serves as a contact surface 104A with which the end portion 101A of the operation shaft 101 comes into contact. As illustrated in Figs. 1 and 2, the contact surface 104A has a spiral staircase shape such that the height position rises step by step counterclockwise in the circumferential direction on the basis of the lowest height position. A rod-like rotation shaft 104B extending in the vertical direction (Z-axis direction) is provided at the center of the movable-range adjustment section 104. This allows the movable-range adjustment section 104 to rotate around the rotation shaft 104B. The rotation shaft 104B is provided off the operation shaft 101 to the right (in the positive direction of the Y-axis). The configuration allows the operating apparatus 100 according to one embodiment to bring the end portion 101A of the operation shaft 101 into contact with the contact surface 104A.

The motor unit 105 is a unit configured to rotate the movable-range adjustment section 104. The motor unit 105 includes a rod-like rotation shaft 105A extending in the vertical direction (Z-axis direction) and a rotary drive unit 105B capable of rotating the rotation shaft 105A. The rotary drive unit 105B is operable under the control of the control unit 10. One example of the rotary drive unit 105B is a stepping motor. The rotation shaft 105A is provided coaxially with the rotation shaft 104B of the movable-range adjustment section 104 and under the rotation shaft 104B. The rotation shaft 105A is connected to the rotation shaft 104B. This configuration allows the motor unit 105 to rotate the movable-range adjustment section 104 by rotating the rotation shaft 105A by driving the rotary drive unit 105B.

### Operation of Operating Apparatus 100

The operating apparatus 100 according to one embodiment is configured such that, when the operating knob 101B is pushed, the operation shaft 101 moves downward. At that time, the amount of movement of the operation shaft 101 is detected by the sensor 103. On this occasion, the operating apparatus 100 can apply a driving force in the vertical direction (Z-axis direction) to the operation shaft 101 using the kinesthetic-sense generator 102. The operating apparatus 100 is configured to limit the amount of downward movement of the operation shaft 101 by bringing the end portion 101A of the operation shaft 101 into contact with the contact surface 104A of the movable-range adjustment section 104.

The operating apparatus 100 according to one embodiment is configured to change the maximum push position of the operation shaft 101 by rotationally moving the movable-range adjustment section 104 by the control of the control unit 10.

In other words, the operating apparatus 100 according to one embodiment can increase the maximum push amount pf the operation shaft 101 as the height position of the contact surface 104A located immediately below the end portion 101A decreases, and can decrease the maximum push amount of the operation shaft 101 as the height position of the contact surface 104A located immediately below the end portion 101A.

The contact surface 104A may be not like a spiral staircase but like a spiral. In this case, the operating apparatus 100 according to one embodiment can change the height position of the contact surface 104A with which the end portion 101A comes into contact by rotationally moving the movable-range adjustment section 104.

### Outline of Tactile Feedback Control by Control Unit 10

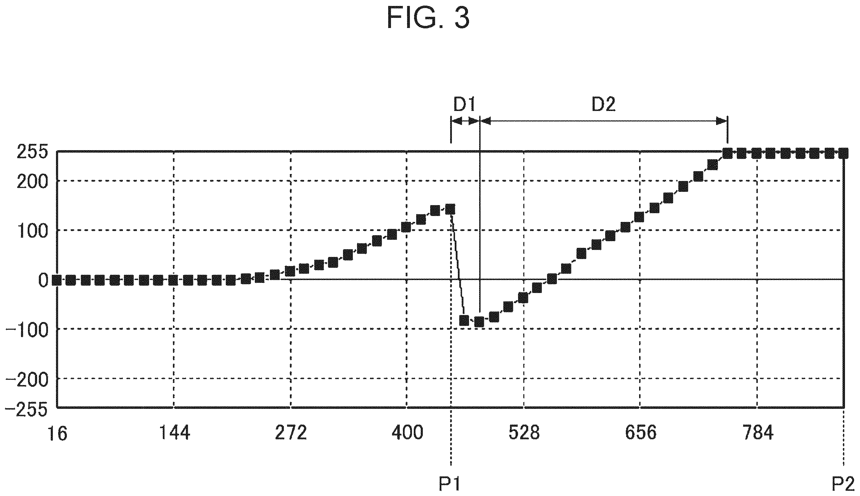

Referring next to Figs. 3 to 6, an outline of tactile feedback control by the control unit 10 of the operating apparatus 100 according to one embodiment will be described. Basic Example of Tactile Feedback Control by Control Unit 10

Fig. 3 is a graph illustrating an example of predetermined load characteristics that the operating apparatus 100 according to one embodiment uses for tactile feedback control. The graph illustrated in Fig. 3 shows load characteristics (an example of "predetermined load characteristics") used by the control unit 10 of the operating apparatus 100 to control the load of a push operation with the operating knob 101B. In the graph illustrated in Fig. 3, the vertical axis represents the load of the push operation, and the horizontal axis indicates the amount of push operation (i.e., the downward push amount of the operation shaft 101). In the graph illustrated in Fig. 3, P1 denotes "first push position" (the value of the amount of push: about 448), and P2 denotes "second push position" (the value of the amount of push: about 880).

As illustrated in Fig. 3, the load of the push operation is adjusted so as to increase gradually as the amount of push increases gradually by the force of the kinesthetic-sense generator 102 applied to the operation shaft 101 being controlled by the control of the control unit 10 until the push position of the operating knob 101B reaches the first push position P1.

As illustrated in Fig. 3, when the push position of the operating knob 101B reaches the first push position P1, the load of the push operation is sharply decreased from a first maximum value (about 150) to a first minimum value (about - 100) by the force of the kinesthetic-sense generator 102 applied to the operation shaft 101 being controlled by the control of the control unit 10. At that time, the sharp decrease in the load of the push operation causes the operating knob 101B to be urged in the same direction as the operating direction (specifically, downward). This allows the operating apparatus 100 to provide a tactile feel to the operator.

Next, as illustrated in Fig. 3, while the push position of the operating knob 101B moves from the first push position P1 to the second push position P2, the load of the push operation is adjusted so as to be gradually increased as the amount of push is gradually increased by the force of the kinesthetic-sense generator 102 applied to the operation shaft 101 being controlled by the control unit 10.

As illustrated in Fig. 3, the predetermined load characteristics include a first period D1 during which the load is decreased after the operating knob 101B reaches the first push position P1 and a second period D2 during which the load is increased after the first period D1.

### Adjustment Example of Tactile Feedback Control by Control Unit 10

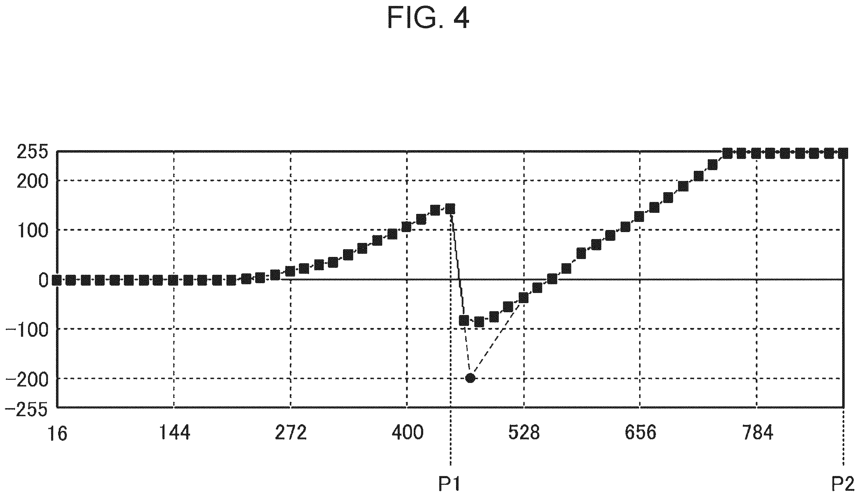

Figs. 4 to 6 are graphs showing adjustment examples of the predetermined load characteristics by the control unit 10 of the operating apparatus 100 according to one embodiment. In Figs. 4 to 6, the dashed lines and circular markers represent the load characteristics after adjustment.

In the case where the operating apparatus 100 according to one embodiment performs tactile feedback control using the load characteristics shown in Fig. 3, if a sufficient moving speed of the operating knob 101B (i.e., a sufficient amount of push operation within a predetermined time) is not achieved during the first period D1 after the push position of the operating knob 101B reaches the first push position P1, there is a risk that sufficient load variation cannot be applied to the push operation, and a suitable tactile feel may not be provided.

For this reason, if it is detected that a sufficient moving speed of the operating knob 101B is not obtained during the first period D1 after the push position of the operating knob 101B reaches the first push position P1, the operating apparatus 100 according to one embodiment adjusts the load characteristics shown in Fig. 3 (specifically, decreases the first minimum value of the load of the push operation) so that the amount of the sharp decrease in the load of the push operation is further increased after the detection, as shown in Fig. 4. In the example shown in Fig. 4, the load characteristics are adjusted so that the first minimum value is decreased from "about -100" to "about - 200".

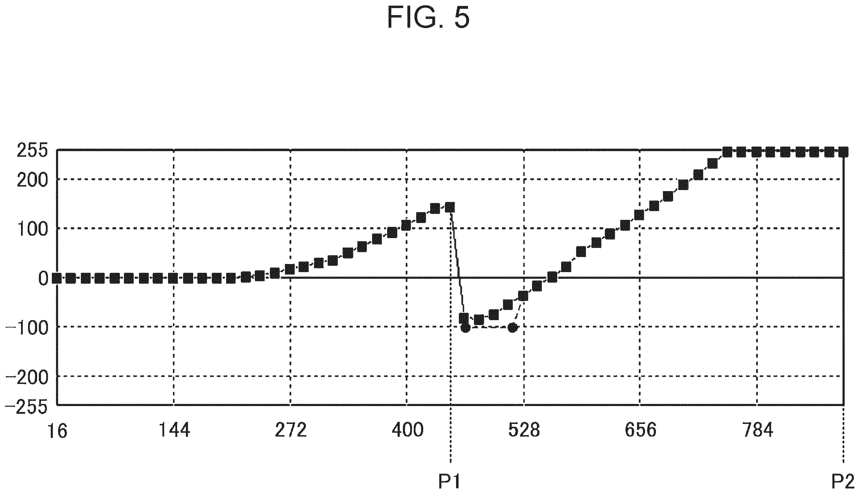

Alternatively, if it is detected that a sufficient moving speed of the operating knob 101B is not obtained during the first period D1 after the push position of the operating knob 101B reaches the first push position P1, the operating apparatus 100 according to one embodiment adjusts the load characteristics shown in Fig. 3 after the detection so that the load of the push operation is sharply decreased to the first minimum value, and thereafter the state in which the load of the push operation is at the first minimum value is kept for a given time, as shown in Fig. 5. In the example shown in Fig. 5, the load characteristics are adjusted so that the first minimum value is kept at "about - 100" for a given time.

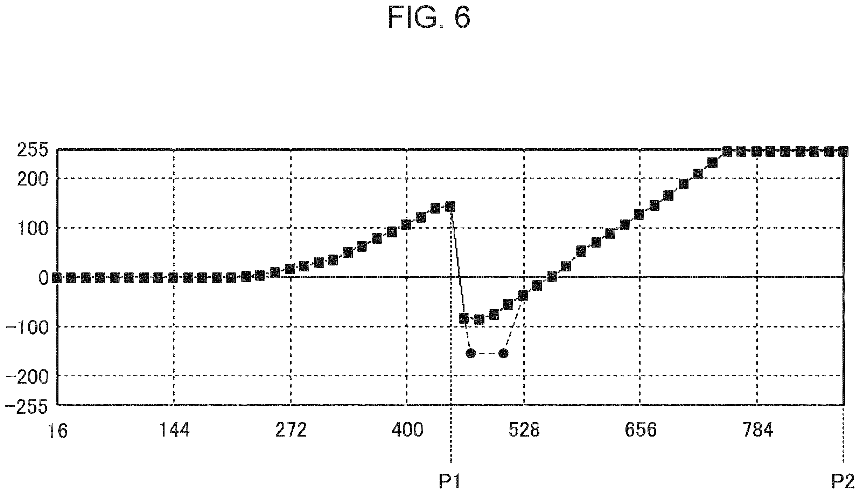

Alternatively, if it is detected that a sufficient moving speed of the operating knob 101B is not obtained during the first period D1 after the push position of the operating knob 101B reaches the first push position P1, the operating apparatus 100 according to one embodiment adjusts the load characteristics shown in Fig. 3 after the detection so that the first minimum value of the load of the push operation is decreased, and thereafter the state in which the load of the push operation is at the first minimum value is kept for a given time, as shown in Fig. 6. In the example shown in Fig. 6, the load characteristics are adjusted so that the first minimum value is decreased from "-100" to "-150", and is kept at "-150" for a given time.

Thus, even if a sufficient moving speed of the operating knob 101B cannot be achieved during the first period D1 after the push position of the operating knob 101B reaches the first push position P1, the operating apparatus 100 according to one embodiment can provide a suitable tactile feel to the push operation of the operating knob 101B by adjusting the load characteristics shown in Fig. 3 to increase the moving speed of the push operation of the operating knob 101B.

### One Example of Functional Configuration of Control Unit 10

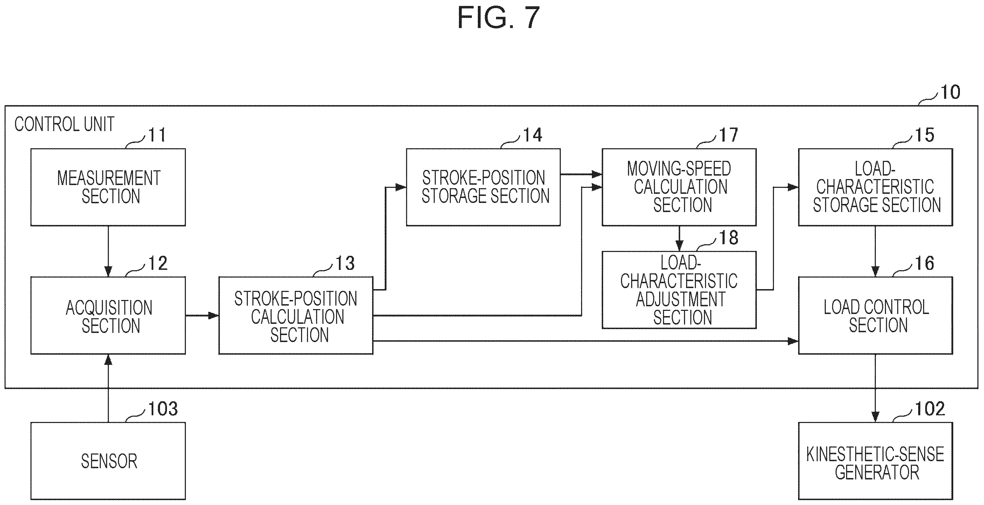

Fig. 7 is a diagram illustrating an example of the functional configuration of the control unit 10 of the operating apparatus 100 according to one embodiment. As illustrated in Fig. 7, the control unit 10 includes a measurement section 11, an acquisition section 12, a stroke-position calculation section 13, a stroke-position storage section 14, a load-characteristic storage section 15, a load control section 16, a moving-speed calculation section 17, and a load-characteristic adjustment section 18 (also simply referred to as "adjustment unit".

The measurement section 11 repeatedly measures the time until a sensor reading trigger occurs. In the control unit 10, the sensor reading trigger occurs repeatedly at predetermined time intervals.

The acquisition section 12 acquires a detection signal output from the sensor 103 every time the sensor reading trigger occurs.

The stroke-position calculation section 13 calculates the stroke position of the operation shaft 101 based on the detection value of the distance from the sensor 103 to the reflector 101C represented by the detection signal obtained by the acquisition section 12.

The stroke-position storage section 14 stores the stroke position calculated by the stroke-position calculation section 13.

The load-characteristic storage section 15 stores predetermined load characteristics for controlling the load of the push operation performed by the operating knob 101B. As illustrated in Fig. 3, the predetermined load characteristics include the first period D1 during which the load is decreased after the operating knob 101B reaches the first push position P1 and the second period D2 during which the load is increased after the first period D1.

The load control section 16 determines the load corresponding to the stroke position calculated by the stroke-position calculation section 13 based on the predetermined load characteristics stored in the load-characteristic storage section 15 as a load to be applied to the operation shaft 101 (i.e., the push operation of the operating knob 101B). The load control section 16 controls the kinesthetic-sense generator 102 so as to apply the determined load to the operation shaft 101 (i.e., the push operation of the operating knob 101B).

The moving-speed calculation section 17 calculates the moving distance of the operation shaft 101 based on the previous stroke position stored in the stroke-position storage section 14 and the latest stroke position calculated by the stroke-position calculation section 13. The moving-speed calculation section 17 calculates the moving speed of the operation shaft 101 (i.e., the moving speed of the operating knob 101B) based on the calculated moving distance of the operation shaft 101.

After the operating knob 101B reaches the first push position P1 (one example of "predetermined position"), the load-characteristic adjustment section 18) adjusts the predetermined load characteristics based on the moving speed of the operating knob 101B.

Specifically, if the moving speed of the operation shaft 101 calculated the moving-speed calculation section 17 is less than a predetermined threshold after the operating knob 101B reaches the first push position P1 (one example of "predetermined position"), the load-characteristic adjustment section 18 adjusts the predetermined load characteristics stored in the load-characteristic storage section 15 so as to apply sufficient load variation to the push operation.

The load-characteristic adjustment section 18 adjusts the load characteristics in the first period D1 of the predetermined load characteristics based on the moving speed of the operating knob 101B during the first period D1 of the predetermined load characteristics.

For example, if the moving speed of the operating knob 101B during the first period D1 of the predetermined load characteristics is less than a predetermined speed, the load-characteristic adjustment section 18 adjusts the load characteristics in the first period D1 of the predetermined load characteristics so as to further decrease the load to be applied to the push operation.

In another example, if the moving speed of the operating knob 101B during the first period D1 of the predetermined load characteristics is less than the predetermined speed, the load-characteristic adjustment section 18 adjusts the load characteristics in the first period D1 of the predetermined load characteristics so as to extend the first period D1.

In still another example, if the moving speed of the operating knob 101B during the first period D1 of the predetermined load characteristics is less than the predetermined speed, the load-characteristic adjustment section 18 adjusts the load characteristics in the first period D1 so as to extend the first period D1, and if the moving speed of the operating knob 101B during the first period D1 after extension is less than the predetermined speed, the load-characteristic adjustment section 18 adjusts the load characteristics in the first period D1 of the predetermined load characteristics so as to further decrease the load during the first period D1 after extension.

In still another example, after further decreasing the load to be applied to the push operation during the first period D1, the load-characteristic adjustment section 18 adjusts the load characteristics in the first period D1 and the second period D2 of the predetermined load characteristics so as to gradually increase the load to be applied to the push operation during the second period D2.

The control unit 10 includes, for example, a central processing unit (CPU), a read only memory (ROM), and a random access memory (RAM). The functional parts of the control unit 10 are implemented, for example, by the CPU executing programs stored in the ROM.

### One Example of Processing Procedure by Control Unit 10

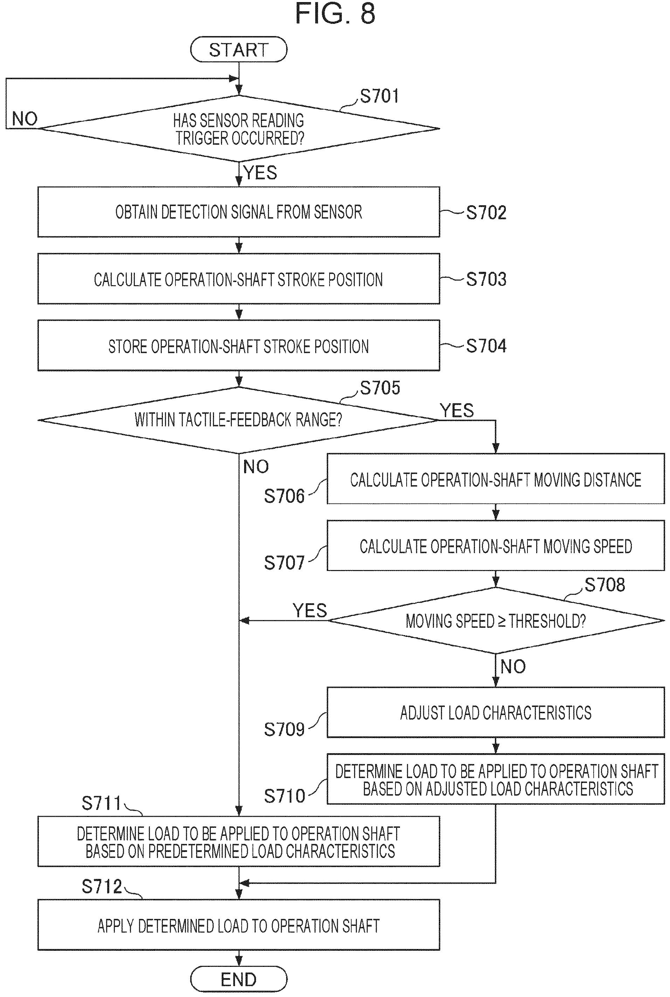

Fig. 8 is a flowchart illustrating an example of the processing procedure of the control unit 10 of the operating apparatus 100 according to one embodiment.

First, the acquisition section 12 determines whether a sensor reading trigger has occurred based on the measurement of time by the measurement section 11 (step S701).

In step S701, if it is determined that no sensor reading trigger has occurred (step S701: No), then the control unit 10 executes step S701 again.

If in step S701 it is determined that a sensor reading trigger has occurred (step S701: No), then the acquisition section 12 obtains a detection signal output from the sensor 103 (step S702).

The stroke-position calculation section 13 calculates the stroke position of the operation shaft 101 based on the detection value of the distance to the reflector 101C represented by the detection signal obtained in step S702 (step S703).

The stroke-position storage section 14 stores the stroke position of the operation shaft 101 calculated in step S703 (step S704).

Next, the control unit 10 determines whether the stroke position of the operation shaft 101 calculated in step S703 falls within a predetermined tactile feedback range (step S705). The "predetermined tactile feedback range" is the range of the push position of the operating knob 101B. For example, the "predetermined tactile feedback range" is the range from the first push position P1 to a predetermined push position.

If in step S705 it is determined that the stroke position calculated in step S703 is not within the predetermined tactile feedback range (step S705: No), the load control section 16 determines the load corresponding to the stroke position calculated in step S703 as the load to be applied to the operation shaft 101 (i.e., the push operation of the operating knob 101B) based on the predetermined load characteristics stored in the load-characteristic storage section 15 (step S711).

The, the load control section 16 controls the kinesthetic-sense generator 102 so as to apply the load determined in step S711 to the operation shaft 101 (i.e., the push operation of the operating knob 101B) (step S712). Afterward, the control unit 10 completes the series processes illustrated in Fig. 8.

In contrast, if in step S705 it is determined that the stroke position calculated in step S703 falls within the predetermined tactile feedback range (step S705: Yes), then the moving-speed calculation section 17 calculates the moving distance of the operation shaft 101 based on the previous stroke position stored in the stroke-position storage section 14 and the latest stroke position calculated by the stroke-position calculation section 13 (step S706). Then, the moving-speed calculation section 17 calculates the moving speed of the operation shaft 101 based on the moving distance of the operation shaft 101 calculated in step S706 (step S707).

Next, the control unit 10 determines whether the moving speed calculated in step S707 is greater than or equal to a predetermined threshold (step S708).

If in step S708 it is determined that the moving speed calculated in step S707 is greater than or equal to the predetermined threshold (step S708: Yes), then the load control section 16 determines that the load corresponding to the stroke position calculated in step S703 as the load to be applied to the operation shaft 101 (i.e., the push operation of the operating knob 101B) based on the predetermined load characteristics stored in the load-characteristic storage section 15 (step S711).

Then, the load control section 16 controls the kinesthetic-sense generator 102 so as to apply the load determined in step S711 to the operation shaft 101 (i.e., the push operation of the operating knob 101B) (step S712). Afterwards, the control unit 10 completes the series of processes illustrated in Fig. 8.

In contrast, if in step S708 it is determined that the moving speed calculated in step S707 is not greater than or equal to the predetermined threshold (step S708: No), the load-characteristic adjustment section 18 adjusts the predetermined load characteristics stored in the load-characteristic storage section 15 so as to apply sufficient load variation to the push operation (step S709). Then, the load control section 16 determines the load corresponding to the stroke position calculated in step S703 as the load to be applied to the operation shaft 101 (i.e., the push operation of the operating knob 101B) based on the load characteristics adjusted in step S709 (step S710).

The, the load control section 16 controls the kinesthetic-sense generator 102 so as to apply the load determined in step S710 to the operation shaft 101 (i.e., the push operation of the operating knob 101B) (step S712). Afterwards, the control unit 10 completes the series of processes illustrated in Fig. 8.

### Load Application Example of Push Operation

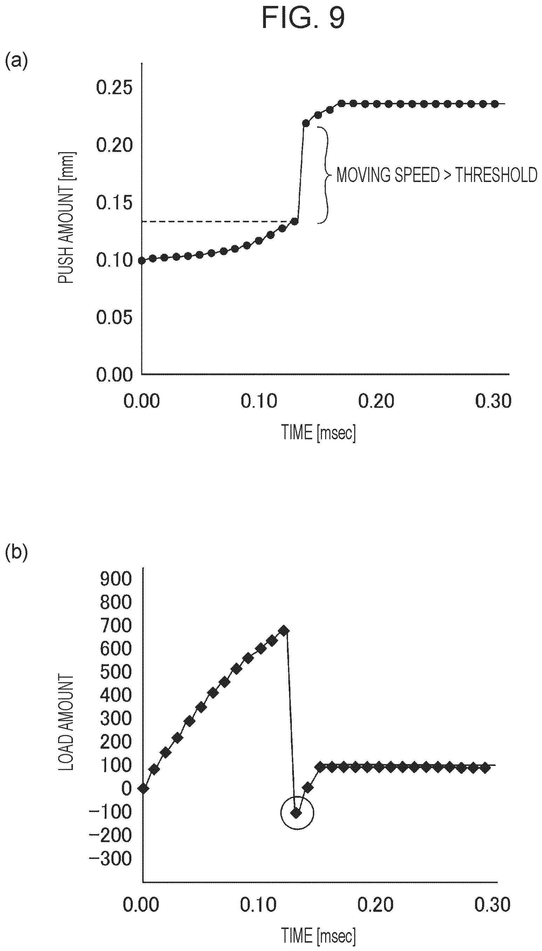

Fig. 9 shows graphs illustrating a load application example of the push operation performed by the operating apparatus 100 according to one embodiment. Fig. 9(a) is a graph illustrating the relationship between the operation time and the amount of push of the push operation by the operating knob 101B. Fig. 9(b) is a graph illustrating the relationship between the operation time and the load amount of the push operation by the operating knob 101B.

In the example illustrated in Fig. 9(a), the amount of push of the operating knob 101B measured immediately after the amount of push of the operating knob 101B reaches a predetermined amount "about 0.14 mm" is "about 0.23 mm". In this case, the difference between the amounts of push is "about 0.09 mm". For example, when the threshold of a sufficient amount of push is "0.05 mm", the control unit 10 determines that a sufficient amount of push of the operating knob 101B was obtained (i.e., a sufficient moving speed of the operating knob 101B was obtained).

In this case, the control unit 10 can sharply decrease the load of the push operation to the first minimum value based on the predetermined load characteristics, as illustrated in Fig. 9(b) (the circled portion).

This allows the operating apparatus 100 according to one embodiment to increase the moving speed of the push operation of the operating knob 101B after the push position of the operating knob 101B reaches the first push position P1, thereby providing a suitable tactile feel to the push operation of the operating knob 101B.

### Load Adjustment Example of Push Operation (First Example)

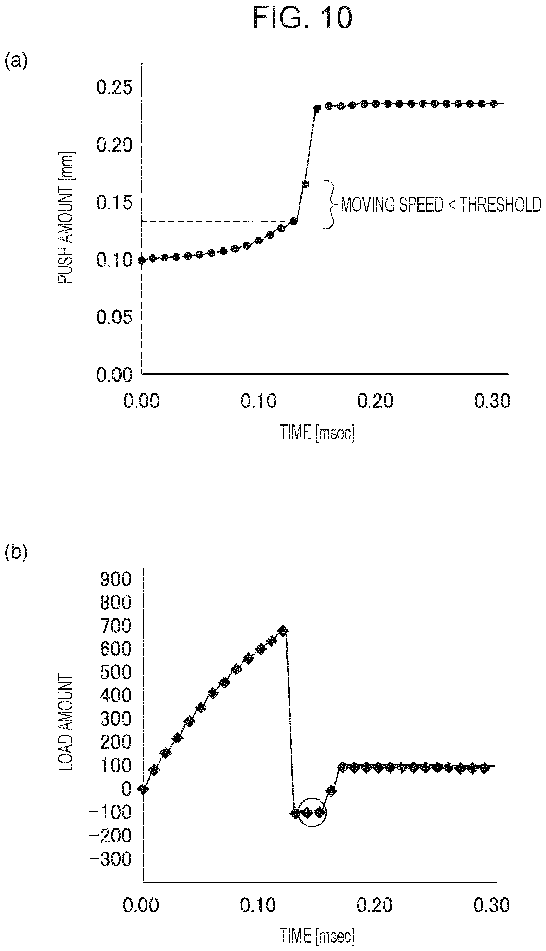

Fig. 10 shows graphs illustrating a load adjustment example (a first example) of the push operation performed by the operating apparatus 100 according to one embodiment. Fig. 10(a) is a graph illustrating the relationship between the operation time and the amount of push of the push operation performed by the operating knob 101B. Fig. 10(b) is a graph illustrating the relationship between the operation time and the load amount of the push operation by the operating knob 101B.

In the example shown in Fig. 10(a), the amount of push of the operating knob 101B measured immediately after the amount of push of the operating knob 101B reaches a predetermined amount "about 0.14 mm" is "about 0.16 mm". In this case, the difference between the amounts of push is "about 0.02 mm". For example, if the threshold of a sufficient amount of push is "0.05 mm", the control unit 10 determines that a sufficient amount of push of the operating knob 101B could not be obtained (i.e., a sufficient moving speed of the operating knob 101B could not be obtained).

In this case, the control unit 10 can sharply decrease the load of the push operation to the first minimum value, as illustrated in Fig. 10(b) (the circular portion), and can thereafter extend a state in which the load amount of the push operation is at the first minimum value for a given time by adjusting the predetermined load characteristics.

This allows the operating apparatus 100 according to one embodiment to increase the moving speed of the operating knob 101B even if a sufficient moving speed of the operating knob 101B cannot be obtained after the push position of the operating knob 101B reaches the first push position P1, thereby providing a suitable tactile feel to the push operation of the operating knob 101B.

### Load Adjustment Example of Push Operation (Second Example)

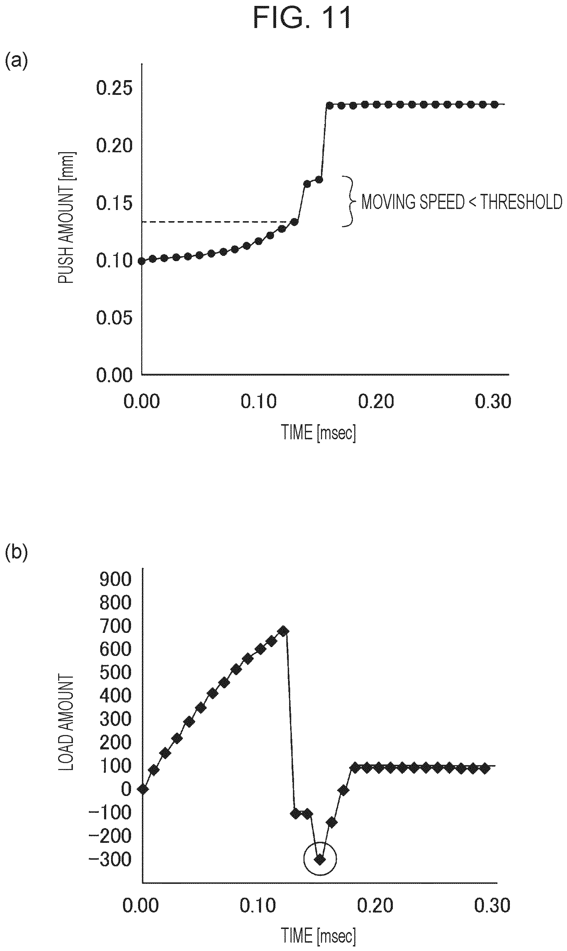

Fig. 11 shows graphs illustrating a load adjustment example (a second example) of the push operation performed by the operating apparatus 100 according to one embodiment. Fig. 11(a) is a graph illustrating the relationship between the operation time and the amount of push of the push operation performed by the operating knob 101B. Fig. 11(b) is a graph illustrating the relationship between the operation time and the load amount of the push operation by the operating knob 101B.

In the example shown in Fig. 11(a), the amount of push of the operating knob 101B measured immediately after the amount of push of the operating knob 101B reaches the predetermined amount "about 0.14 mm" is "about 0.16 mm". In this case, the difference between the amounts of push is "about 0.02 mm". For example, if the threshold of a sufficient amount of push is "0.05 mm", the control unit 10 determines that a sufficient amount of push of the operating knob 101B could not be obtained (i.e., a sufficient moving speed of the operating knob 101B could not be obtained).

In this case, the control unit 10 can sharply decrease the load of the push operation to the first minimum value and can thereafter extend a state in which the load amount of the push operation is at the first minimum value for a given time, as illustrated in Fig. 11(b), by adjusting the predetermined load characteristics.

In the example shown in Fig. 11(a), the amount of push of the operating knob 101B measured immediately after is "about 0.17 mm". In this case, the difference between the amounts of push is "about 0.01 mm". The control unit 10 determines that a sufficient amount of push of the operating knob 101B could not be obtained (i.e., a sufficient moving speed of the operating knob 101B could not be obtained).

Thus, if a sufficient amount of push of the operating knob 101B could not be obtained also in the extended period during which the load amount of the push operation is at the first minimum value (i.e., a sufficient moving speed of the operating knob 101B could not be obtained), the operating apparatus 100 can further decrease the load amount of the push operation below the first minimum value, as illustrated in Fig. 11(b) (the circled portion).

This allows the operating apparatus 100 according to one embodiment to increase the moving speed of the operating knob 101B even if a sufficient moving speed of the operating knob 101B cannot be obtained after the push position of the operating knob 101B reaches the first push position P1, thereby providing a suitable tactile feel to the push operation of the operating knob 101B.

### Load Adjustment Example of Push Operation (Third Example)

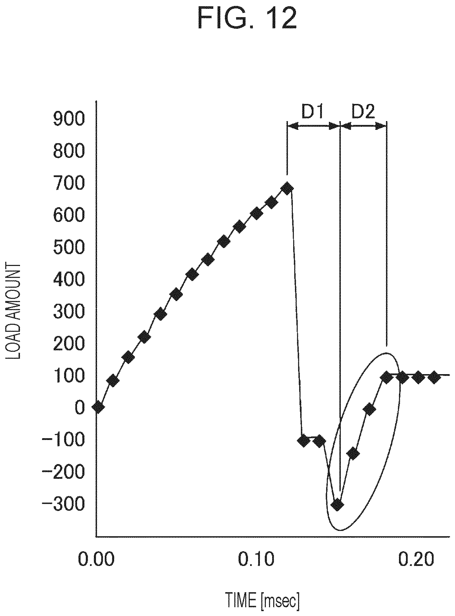

Fig. 12 is a graph illustrating a load adjustment example (a third example) of the push operation performed by the operating apparatus 100 according to one embodiment. Fig. 12 is a graph illustrating the relationship between the operation time and the load amount of the push operation by the operating knob 101B.

As illustrated in Fig. 12, the operating apparatus 100 can extend the state in which the load amount of the push operation is kept at the first minimum value for a given time in the first period D1 during which the load to be applied to the push operation is decreased and can further decrease the load amount of the push operation below the first minimum value.

As the first period D1 extends, the load to be applied to the push operation may sharply increase in the second period D2.

In this case, the operating apparatus 100 can adjust the load characteristics so as to gradually increase the load to be applied to the push operation during the second period D2, as illustrated in Fig. 12 (the circled portion).

This allows the operating apparatus 100 according to one embodiment to eliminate or minimize the sharp increase in the load to be applied to the push operation during the second period D2, thereby preventing or minimizing providing unwanted operational feeling and vibrations to the push operation.

Having described one embodiment of the present invention in detail above, it is to be understood that the present invention is not limited to the embodiment and that various modifications and changes may be made within the spirit and scope of the present invention as hereinafter claimed.

In one embodiment, an application example of the present invention to an operating apparatus capable of a push operation is described as an example of "a movement operation by the operating unit". However, this is illustrative only. The present invention is also applicable to an operating apparatus capable of other operations (for example, a rotating operation, a sliding operation, etc.) as "a movement operation by the operating unit".

This international application claims priority to Japanese Patent Application No. 2022-086659 filed on May 27, 2022, which is hereby incorporated by reference in its entirety.

### Reference Signs List

10 CONTROL UNIT
11 MEASUREMENT SECTION
12 ACQUISITION SECTION
13 STROKE-POSITION CALCULATION SECTION
14 STROKE-POSITION STORAGE SECTION
15 LOAD-CHARACTERISTIC STORAGE SECTION
16 LOAD CONTROL SECTION
17 MOVING-SPEED CALCULATION SECTION
18 LOAD-CHARACTERISTIC ADJUSTMENT SECTION
100 OPERATING APPARATUS
101 OPERATION SHAFT (OPERATING UNIT)
101A END PORTION
101B OPERATING KNOB
101C REFLECTOR
102 KINESTHETIC-SENSE GENERATOR (LOAD APPLICATION UNIT)
103 SENSOR (POSITION DETECTION UNIT)
104 MOVABLE-RANGE ADJUSTMENT SECTION
104A CONTACT SURFACE
104B ROTATION SHAFT
105 MOTOR UNIT
105A ROTATION SHAFT
105B ROTARY DRIVE UNIT
D1 FIRST PERIOD
D2 SECOND PERIOD
P1 FIRST PUSH POSITION
P2 SECOND PUSH POSITION

## Claims

1. An operating apparatus comprising:
an operating unit capable of a movement operation;
a load application unit configured to apply a load to the movement operation of the operating unit based on predetermined load characteristics; and
an adjustment unit configured to adjust the load characteristics based on a moving speed of the operating unit after the operating unit reaches a predetermined position.

2. The operating apparatus according to Claim 1,
wherein the load characteristics include a first period in which the load is decreased after the operating unit reaches a predetermined position and a second period in which the load is increased after the first period, and
wherein the adjustment unit adjusts the load characteristics of the first period based on the moving speed in the first period.

3. The operating apparatus according to Claim 2, wherein, when the moving speed in the first period is less than a predetermined speed, the adjustment unit adjusts the load characteristics of the first period so as to further decrease the load in the first period.

4. The operating apparatus according to Claim 2, wherein, when the moving speed in the first period is less than a predetermined speed, the adjustment unit adjusts the load characteristics of the first period so as to extend the first period.

5. The operating apparatus according to Claim 2,
wherein, when the moving speed in the first period is less than a predetermined speed, the adjustment unit adjusts the load characteristics of the first period so as to extend the first period, and
wherein, when the moving speed in the first period after extension is less than the predetermined speed, the adjustment unit adjusts the load characteristics of the first period so as to decrease the load in the first period after the extension.

6. The operating apparatus according to Claim 3, wherein, after further decreasing the load in the first period, the adjustment unit adjusts the load characteristics of the second period so as to gradually increase the load in the second period.

7. The operating apparatus according to Claim 2, wherein the load application unit urges the operating unit in a same direction as an operating direction by decreasing the load in the first period.

8. The operating apparatus according to Claim 2, wherein the load application unit provides a tactile feel to the movement operation by decreasing the load in the first period and increasing the load in the second period.

9. The operating apparatus according to Claim 1, wherein the load application unit comprises a voice coil motor.

10. The operating apparatus according to Claim 1, further comprising:
a position detection unit configured to detect a position of the operating unit,
wherein the adjustment unit determines whether the operating unit has reached the predetermined position based on a detection result of the position detection unit.

11. The operating apparatus according to Claim 1, wherein the movement operation includes at least one of a push operation, a rotating operation, and a sliding operation.
